# FASCICULE DE BREVET EUROPEEN

(11) **EP 2 364 408 B1**
(45) Date de publication et mention de la délivrance du brevet: **06.03.2013**
(21) Numéro de dépôt: 09797069.3
(22) Date de dépôt: 24.11.2009
(51) Int. Cl.: F16H 25/22, F16H 25/24

(54) **ACTIONNEUR LINEAIRE**
LINEARBETÄTIGUNGSGLIED
LINEAR ACTUATOR

(30) Priorité: 25.11.2008 FR 0858000
(43) Date de publication de la demande: 14.09.2011
(73) Titulaire: Precilec, 89000 Auxerre (FR)
(72) Inventeur: GAECHTER, Jean-Pierre, F-31320 Rebigue (FR)
(74) Mandataire: Rhein, Alain
(86) Numéro de dépôt international: PCT/FR2009/052276
(87) Numéro de publication internationale: WO 2010/061123

(56) Documents cités:
- FR-A- 2 844 019
- US-A- 2 756 609
- US-A- 2 943 508

## Description

La présente invention a trait à un actionneur linéaire comportant une vis à billes permettant de convertir un mouvement de rotation en un mouvement de translation.

Cette invention concerne le domaine de la fabrication des actionneurs linéaires mécaniques, plus particulièrement ceux conçus pour assurer un actionnement sous l'impulsion d'un moteur électrique (actionneur électromécanique).

On connaît, d'ores et déjà, un tel type d'actionneur électromécanique permettant de remédier aux inconvénients des actionneurs hydrauliques ou pneumatiques, usuellement constitués par des vérins, nécessitant une source de fluide externe, difficiles à commander et manquant de précision.

Un tel actionneur électromécanique comporte, généralement, un système vis écrou à billes ainsi qu'un moteur électrique conçu pour entraîner en rotation ledit écrou qui, par sa rotation, entraîne la vis en translation.

En particulier, il est connu du document EP-1.523.630 un actionneur électromécanique comportant un corps tubulaire externe pourvu, intérieurement, d'au moins une piste de roulement hélicoïdale, destinée à assurer le guidage de billes que comporte cet actionneur, et conférant à ce corps tubulaire externe la structure d'une vis.

Cet actionneur comporte, également, un corps tubulaire interne, mobile en translation à l'intérieur du corps tubulaire externe, et comportant, intérieurement, un moteur électrique pour l'entraînement en rotation d'un arbre coaxial aux deux corps tubulaires.

L'actionneur comporte, également, un écrou, mobile en translation et en rotation à l'intérieur du corps tubulaire, et monté fixe en rotation sur ledit arbre pour son entraînement en rotation par celui-ci, ceci sous l'impulsion du moteur. Cet écrou présente, d'une part, un chemin de roulement hélicoïdal s'étendant autour de cet écrou et pourvu de deux extrémités et, d'autre part, une zone de re-circulation raccordant les deux

extrémités de ce chemin de roulement. En fait, un tel écrou est constitué par plusieurs éléments alignés, de forme cylindrique, et présentant chacun au moins un chanfrein. Les chanfreins de deux éléments immédiatement juxtaposés définissent un chemin de roulement pour les billes de l'actionneur.

Cette conception avantageuse d'un tel actionneur permet de bénéficier d'un diamètre de circulation du centre des billes supérieur à celui des actionneurs classiques ainsi que de recourir à des billes de diamètre, là encore, supérieur. Ceci concourt à réduire, de manière significative, la contrainte de Hertz appliquée, de manière ponctuelle, par ces billes sur la piste de roulement pour un même effort d'actionnement que celui exercé dans le cas d'un actionneur classique. Il en résulte que le corps tubulaire externe subit, en fonctionnement normal de l'actionneur, des contraintes réduites ce qui permet, avantageusement, de réaliser un tel corps en matière plastique, notamment par moulage.

Cependant, un tel actionneur présente des inconvénients lorsqu'il est soumis à des contraintes statiques plus importantes que les contraintes dynamiques exercées en fonctionnement normal d'actionnement par l'actionneur et résultant, notamment, d'un choc subi par cet actionneur. En effet, sous l'effet d'une telle contrainte statique les billes ont tendance à prendre fortement appui contre la piste de roulement et à en provoquer une dégradation.

On connaît, également, un actionneur linéaire décrit dans le document US-2.756.609 constituent l'état de la technique le plus proche, et comportant, d'une part, un corps tubulaire externe s'étendant selon un axe et, d'autre part, un corps tubulaire interne, mobile en translation à l'intérieur du corps tubulaire externe, et coaxial à celui-ci. Cet actionneur linéaire comporte, encore, monté sur un arbre coaxial aux corps tubulaires, au moins un écrou, mobile en rotation et en translation à l'intérieur du corps tubulaire externe, et présentant, d'une part, au moins un chemin de roulement hélicoïdal s'étendant autour de cet écrou et pourvu de deux extrémités et, d'autre part, une zone de re-circulation

raccordant les deux extrémités d'un tel chemin de roulement. Cet actionneur linéaire comporte, également, des billes disposées entre un chemin de roulement d'au moins un écrou et le corps tubulaire externe ainsi que dans la zone de re-circulation d'un tel écrou.

La présente invention se veut à même de remédier aux inconvénients des actionneurs de l'état de la technique.

A cet effet, l'invention concerne un actionneur linéaire comportant :
- un corps tubulaire externe s'étendant selon un axe et présentant, intérieurement, au moins une piste de roulement hélicoïdale ;
- un corps tubulaire interne, mobile en translation à l'intérieur du corps tubulaire externe, coaxial à celui-ci, et recevant intérieurement un moteur d'entraînement en rotation d'un arbre coaxial aux corps tubulaires ;
- monté sur cet arbre, au moins un écrou, mobile en rotation et en translation à l'intérieur du corps tubulaire externe, et présentant, d'une part, au moins un chemin de roulement hélicoïdal s'étendant autour de cet écrou et pourvu de deux extrémités et, d'autre part, une zone de re-circulation raccordant les deux extrémités d'un tel chemin de roulement ;
- des billes disposées entre un chemin de roulement d'au moins un écrou et une piste de roulement du corps tubulaire externe ainsi que dans la zone de re-circulation d'un tel écrou.

Selon l'invention, cet actionneur comporte :
- au moins un moyen d'appui, d'une part, constitué par un patin de forme générale cylindrique rendu solidaire fixement de l'arbre et présentant au moins un filet hélicoïdal s'étendant autour de ce patin et, d'autre part, conçu pour prendre appui sur une piste de roulement du corps tubulaire externe selon au moins une ligne de contact ;
- au moins un moyen de commande de ce moyen d'appui, ce moyen de commande comportant, d'une part, un moyen pour le montage, fixe en rotation et mobile en translation, du ou des écrous sur l'arbre et, d'autre part, axialement et de part et d'autre d'un tel écrou, au moins un moyen pour exercer une précontrainte sur un tel écrou, ce moyen de commande étant conçu, d'une part, pour maintenir un tel moyen d'appui dans une position inactive d'appui dans laquelle il subsiste un jeu entre ce moyen d'appui et la piste de roulement et, d'autre part, pour faire adopter à un tel moyen d'appui une position active d'appui sur la piste de roulement, ceci sous l'effet d'une contrainte axiale, supérieure à une contrainte seuil, exercée sur l'actionneur.

Une caractéristique additionnelle concerne le fait que le moyen pour exercer une précontrainte est constitué par un élément élastique écrasé à une côte correspondant à la contrainte seuil.

Finalement, une autre caractéristique consiste en ce que le ou les écrous de cet actionneur comportent au moins deux cames :
- de forme générale cylindrique ;
- alignées axialement ;
- présentant chacune au moins un chanfrein de forme adaptée, réalisé en sorte de définir un chemin de roulement hélicoïdal autour de cet écrou et un usinage réalisé en sorte de définir une zone de re-circulation des billes.

L'actionneur, conforme à la présente invention, comporte un moyen conçu pour prendre appui sur une piste de roulement du corps tubulaire externe, ceci selon au moins une ligne de contact. Un tel type d'appui permet, avantageusement, de répartir les contraintes exercées sur une telle piste de roulement conformément à une ligne de contact et non plus de limiter l'application de ces contraintes à des zones ponctuelles correspondant au contact ponctuel d'une bille avec cette piste de roulement.

Un autre avantage consiste en ce que l'actionneur comporte un moyen de commande qui assure le maintien de ce moyen d'appui dans une position inactive dans laquelle ce moyen d'appui n'est pas en appui contre la piste de roulement et, ainsi, n'entrave pas l'actionnement, ceci lorsque cet actionneur est au repos ainsi que dans le cadre du fonctionnement normal de l'actionneur mais également lorsqu'il est exercé, sur cet actionneur, une contrainte axiale inférieure à une contrainte seuil.

Au contraire, ce moyen de commande est conçu pour faire adopter au moyen d'appui une position active d'appui contre la piste de roulement, ceci uniquement lorsqu'une contrainte axiale supérieure à une valeur seuil est exercée sur cet actionneur. Une telle contrainte correspond, par exemple, à une contrainte statique exercée sur l'actionneur et résultant, notamment, d'un choc subi par cet actionneur, par l'élément mobile actionné par cet actionneur ou par l'élément fixe associé à cet actionneur.

Un autre avantage consiste en ce que ce moyen d'appui et ce moyen de commande sont constitués par des éléments présentant une conception simple et autorisant une intervention aisée, notamment en vue de leur mise en place, de leur contrôle ou de leur remplacement.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :
- la figure 1 est une vue générale et en coupe d'un actionneur conforme à la présente invention ;
- la figure 2 est une vue schématisée et en détail de l'actionneur illustré figure 1 et représentant l'écrou, le moyen d'appui ainsi qu'un premier mode de réalisation du moyen de commande, ceci en position inactive d'appui du moyen d'appui ;
- la figure 3 est une vue similaire à la précédente et correspond au moyen de commande et au moyen d'appui adoptant une position active d'appui du moyen d'appui ;
- la figure 4 est une vue schématisée et en détail d'un actionneur et représentant l'écrou, le moyen d'appui ainsi qu'un deuxième mode de réalisation du moyen de commande, ceci en position inactive d'appui du moyen d'appui ;
- la figure 5 est une vue schématisée et en perspective d'un moyen d'appui conforme à l'invention.

La présente invention concerne le domaine de la fabrication des actionneurs linéaires mécaniques comportant une vis à billes permettant de convertir un mouvement de rotation en un mouvement de translation.

Un tel actionneur 1 comporte un corps tubulaire externe 2 s'étendant selon un axe et présentant, intérieurement, au moins une piste de roulement hélicoïdale 20 définie au niveau de la paroi interne 21 de ce corps tubulaire externe 2.

En fait, une telle piste de roulement 20 peut être réalisée par déformation de cette paroi interne 21 ou par moulage au cours du processus de fabrication du corps tubulaire 2. Un autre mode de réalisation consiste en ce que cette piste de roulement 20 peut être définie par au moins un fil (plus particulièrement en acier haute résistance) conformé en hélice et positionné à l'intérieur du corps tubulaire externe 2, contre la paroi interne 21 de celui-ci 2.

Cet actionneur 1 comporte, encore, un corps tubulaire interne 3 s'étendant, là encore, selon un axe qui correspond, de préférence, à l'axe du corps tubulaire externe 2 en sorte que ces corps tubulaires (2 ; 3) soient coaxiaux.

En fait, ce corps tubulaire interne 3 s'étend, au moins en partie, à l'intérieur du corps tubulaire externe 2. L'actionneur 1 est conçu en sorte que ces corps tubulaires (2 ; 3) soient fixes en rotation mais mobiles en translation en sorte de permettre un coulissement du corps tubulaire interne 3 par rapport au corps tubulaire externe 2 et intérieurement à celui-ci 2, ceci selon la direction longitudinale de ces corps tubulaires (2 ; 3).

L'actionneur 1 comporte, également, un moyen 4 conçu pour entraîner en coulissement ces corps tubulaires (2 ; 3) l'un 2 par rapport à l'autre 3.

Un tel moyen d'entraînement 4 comporte, d'une part, un moteur électrique 40 dont le stator est monté fixement à l'intérieur du corps tubulaire interne 3.

D'autre part, ce moyen d'entraînement 4 comporte un arbre d'entraînement 41, solidaire en rotation du rotor du moteur électrique 40 (soit directement, soit au travers d'un réducteur de vitesse), pour son entraînement en rotation, et s'étendant selon un axe correspondant, de préférence, à l'axe des corps tubulaires (2 ; 3).

Cet arbre d'entraînement 41 s'étend au moins en partie à l'intérieur du corps tubulaire interne 3 dans lequel 3 il est guidé par l'intermédiaire d'au moins un palier 30, notamment un roulement à billes, que comporte intérieurement ce corps tubulaire interne 3 et dont la bague intérieure est montée fixe en rotation sur l'arbre 41 tandis que la bague extérieure est montée fixe en rotation à l'intérieur du corps tubulaire interne 3, notamment sur la paroi interne 31 de celui-ci 3.

Tel que visible sur les figures en annexe, cet arbre d'entraînement 41 s'étend, également, à l'extérieur de ce corps tubulaire interne 3 ainsi qu'à l'intérieur du corps tubulaire externe 2 de l'actionneur 1.

Le moyen d'entraînement 4 comporte, encore, au moins un écrou 42 présentant, d'une part, au moins un chemin de roulement hélicoïdal 420 s'étendant autour de cet écrou 42 et pourvu de deux extrémités et, d'autre part, une zone de re-circulation 421 raccordant les deux extrémités d'un tel chemin de roulement 420.

En outre, ce moyen d'entraînement 4 comporte un moyen 43 pour le montage fixe en rotation d'un tel écrou 42 sur l'arbre d'entraînement 41. Ce moyen de montage 43 autorise, alors, un montage d'un tel écrou 42 de manière mobile en rotation ainsi qu'en translation à l'intérieur du corps tubulaire externe 2.

Finalement, ce moyen d'entraînement 4 comporte une pluralité de billes 44 disposées entre un chemin de roulement hélicoïdal 420 d'au moins un écrou 42 et une piste de roulement 20 du corps tubulaire externe 2 ainsi que dans la zone de re-circulation 421 d'un tel écrou 42.

Ce moyen d'entraînement 4 est, alors, conçu pour que le moteur électrique 40 entraîne en rotation l'arbre d'entraînement 41 qui lui-même entraîne en rotation au moins un écrou 42. Un tel écrou 42, sous l'effet de sa rotation, entraîne les billes 44 qui se déplacent à l'intérieur du chemin de roulement hélicoïdal 420 de cet écrou 42 ainsi qu'à l'intérieur de la piste de roulement 20 du corps tubulaire externe 2 provoquant, ainsi, le coulissement du corps tubulaire interne 3 par rapport à ce corps tubulaire externe 2.

Selon l'invention, cet actionneur 1 comporte au moins un moyen 5, associé à l'arbre 41, et conçu pour prendre appui sur une piste de roulement 20 du corps tubulaire externe 2 selon au moins une ligne de contact.

A ce propos et tel que visible sur les figures en annexe, ce moyen d'appui 5 se présente comme un patin 50 de forme générale cylindrique s'étendant selon un axe qui correspond, de préférence, à l'axe des corps tubulaires (2 ; 3).

Un tel patin 50 est rendu solidaire fixement (en rotation et en translation) de l'arbre d'entraînement 41, plus particulièrement de l'extrémité libre de cet arbre 41, opposée à celle en prise avec le moteur électrique 40.

Une autre caractéristique de ce patin 50 consiste en ce qu'il présente au moins un filet hélicoïdal 51 s'étendant autour de ce patin 50, plus particulièrement au niveau de la tranche de ce patin 50.

Ce filet hélicoïdal 51 présente un pas sensiblement égal au pas de la piste de roulement hélicoïdale 20 du corps tubulaire externe 2.

Tel que visible sur les figures en annexe, ce filet hélicoïdal 51 présente un profil adoptant grossièrement une forme générale en demi-cercle dont le rayon est sensiblement égal à celui des billes 44.

De manière plus précise, ce filet hélicoïdal 51 présente, en fait, un profil adoptant la forme de deux arcs de cercles 52 dont les centres sont, de préférence, décalés et dont les rayons correspondent, sensiblement, à celui des billes 44.

A ce propos, on observera que les centres des cercles de ces deux arcs de cercle 52 sont décalés axialement, plus particulièrement conformément à un axe parallèle à l'axe du corps tubulaire externe 2 et/ou passant par le centre d'une bille 44 en roulement sur la piste de roulement 20 de ce corps tubulaire externe 2.

En fait, le décalage entre les centres des cercles des deux arcs de cercles 52 correspond, sensiblement, à un jeu latéral 53 défini entre le filet 51 du patin 50 et la piste de roulement 20 du corps tubulaire externe 2.

C'est, plus particulièrement, les portions du filet 51 du patin 50 délimitées par ces deux arcs de cercles 52 qui sont aptes à venir en appui contre la piste de roulement 20 du corps tubulaire externe 2 (plus particulièrement contre les côtés de cette piste 20), ceci selon au moins une ligne de contact.

A ce propos, il convient d'observer que cette piste de roulement 20 présente un profil adoptant la forme d'un demi-cercle dont le rayon correspond sensiblement à celui des billes 44 qui roulent sur cette piste 20. Le profil de cette piste de roulement 20 correspond, alors, également, au profil des deux arcs de cercles 52 du filet hélicoïdal 51 du patin 50 de sorte que ce patin 50 est susceptible de prendre appui sur cette piste de roulement 20 selon une ligne de contact présentant une certaine largeur et qui s'apparente, en fait, plus particulièrement, à une bande de contact dont la largeur correspond sensiblement à la longueur d'un tel arc de cercle 52.

Une autre caractéristique du filet hélicoïdal 51 du patin 50 consiste en ce que le sommet 54 de ce filet 51 présente au moins une portion tronquée de manière à éviter le contact de ce sommet 54 avec la piste de roulement 20 (plus particulièrement avec le fond de la piste de roulement 20) du corps tubulaire externe 2.

En ce qui concerne la prise d'appui du moyen d'appui 5 sur la piste de roulement 20 du corps tubulaire externe 2, celle-ci résulte, en fait, d'une contrainte externe exercée sur l'actionneur 1 (notamment sur le corps tubulaire externe 2 et/ou sur le corps tubulaire interne 3 de cet actionneur 1). Une telle contrainte externe correspond à une contrainte accidentelle (autre qu'une contrainte exercée sur cet actionneur 1 dans le cadre de son fonctionnement normal d'actionnement) consistant, plus particulièrement, en une contrainte statique, notamment résultant d'un choc que subit cet actionneur 1.

A ce propos, on observera qu'une telle contrainte externe présente une composante axiale F s'étendant conformément à l'axe d'extension des corps tubulaires (2 ; 3) et de l'arbre d'entraînement 41.

Selon l'invention, l'actionneur 1 comporte, également, au moins un moyen pour la commande 6 du moyen d'appui 5 susmentionné.

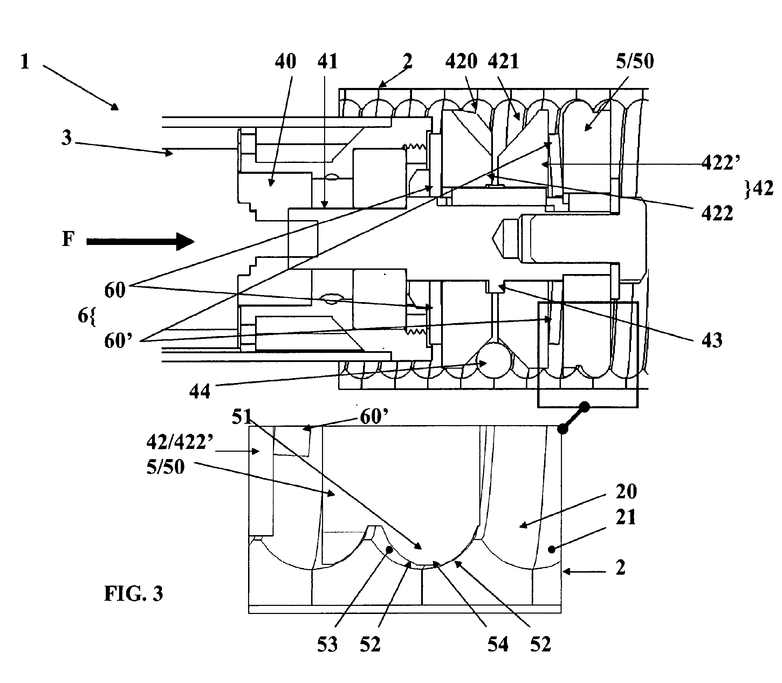

Ce moyen de commande 6 est conçu pour faire adopter à un tel moyen d'appui 5 une position active d'appui sur la piste de roulement 20 (selon au moins une ligne de contact comme décrit ci-dessus), ceci sous l'effet d'une contrainte axiale F, supérieure à une contrainte seuil Fs, exercée sur l'actionneur 1 (figure 3).

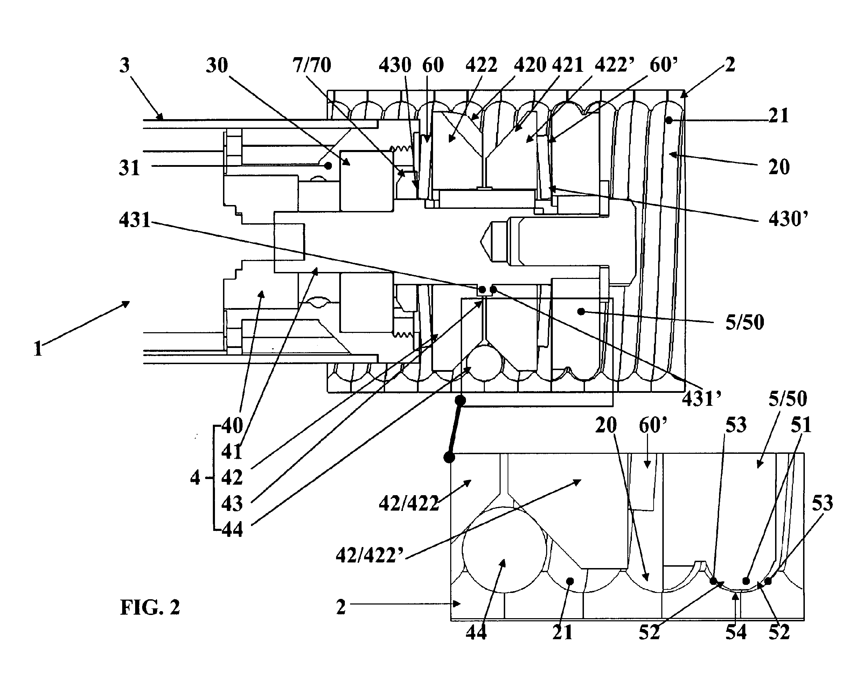

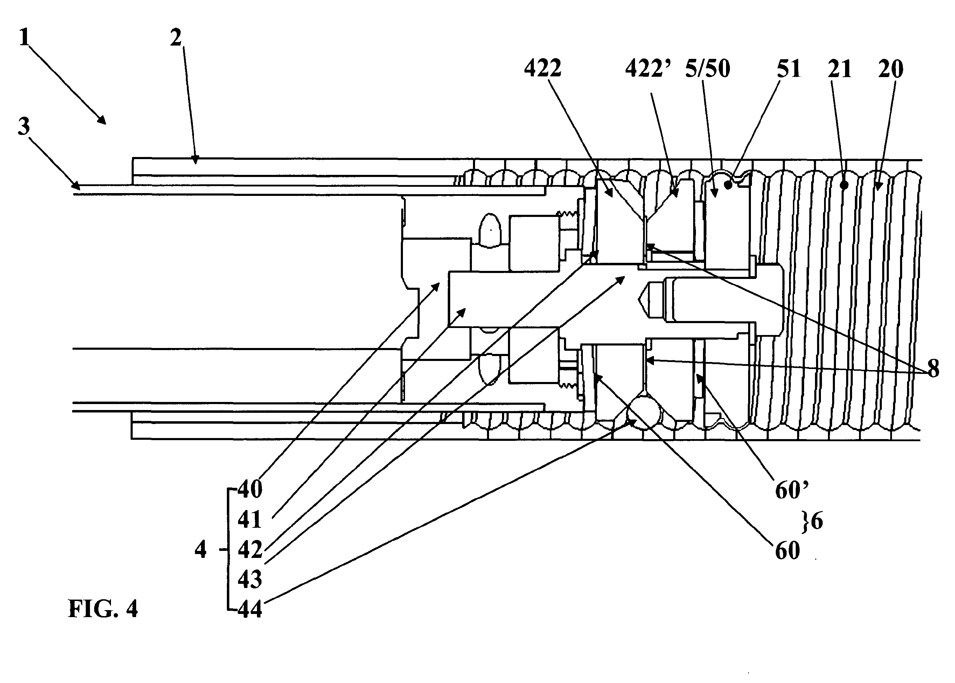

Ce moyen de commande 6 est, également, conçu pour maintenir un tel moyen d'appui 5 dans une position inactive d'appui dans laquelle il subsiste un jeu 53 (de chaque côté du filet 51) entre ce moyen d'appui 5 et la piste de roulement 20, ceci en l'absence de contrainte ou pour une contrainte axiale F inférieure à ladite contrainte seuil Fs (figures 2 et 4).

Tel qu'évoqué ci-dessus, le moyen d'entraînement 4 comporte un moyen de montage 43 d'au moins un écrou 42 sur l'arbre d'entraînement 41.

En fait et selon une caractéristique particulière de l'invention, le moyen de commande 6 du moyen d'appui 5 est, au moins en partie, constitué par ce moyen de montage 43 qui est, conformément à l'invention, conçu pour assurer un montage, fixe en rotation et mobile en translation, du ou des écrous 42 sur l'arbre 41.

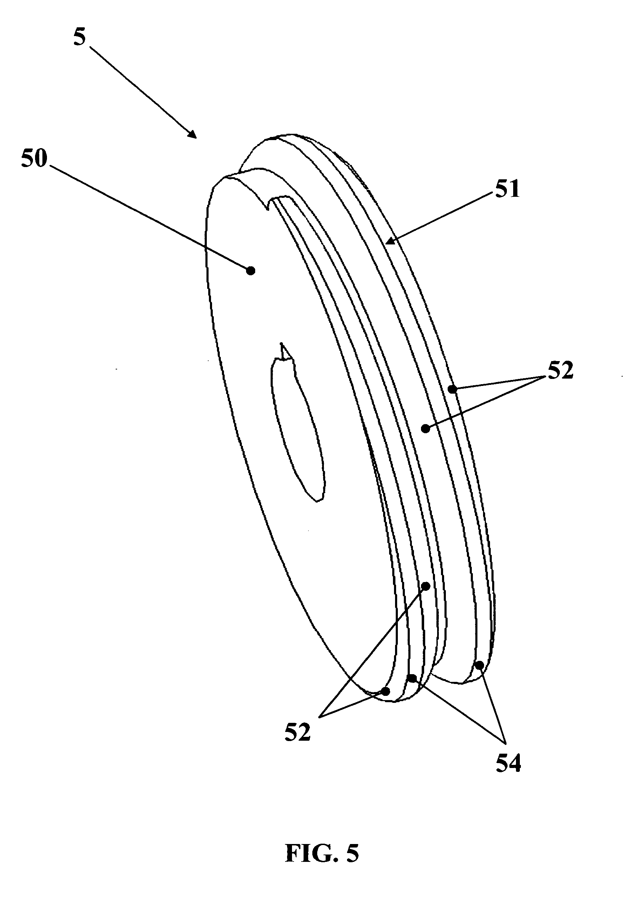

A ce propos, on observera que, pour réaliser un tel type de montage, ce moyen de montage 43 comporte, à titre d'exemple, au moins une clavette conçue pour coopérer avec une rainure ménagée au moins au niveau d'un écrou 42, voire encore au niveau de l'arbre 41 ainsi qu'au niveau du moyen d'appui 5 (figure 5).

Une autre caractéristique consiste en ce qu'un tel moyen de montage 43 d'un écrou 42 comporte des butées latérales (430, 430') entre lesquelles un tel écrou 42 est monté en translation.

En fait et tel que visible sur les figures en annexe, au moins une telle butée latérale 430 peut être constituée par un épaulement associé à l'arbre d'entraînement 41. Un tel épaulement peut, alors, être défini au niveau du corps de l'arbre 41 ou, encore, être défini au niveau d'un écrou de serrage 70 (décrit plus en détail ci-dessous) monté axialement sur cet arbre 41.

De plus, l'une de ces butées latérales 430' peut être constituée par le moyen de prise d'appui 5 susmentionné.

Il a été représenté sur les figures en annexe, un mode préféré de réalisation de l'invention correspondant à un actionneur 1 comportant un unique écrou 42 monté sur l'arbre 41 de manière mobile en translation entre deux butées latérales (430, 430'). Dans ce mode de réalisation, l'une 430' de ces butées latérales est, alors, constituée par le moyen de prise d'appui 5 tandis que l'autre 430 est constituée par un écrou 7 associé à l'arbre 41.

Une caractéristique additionnelle de l'invention consiste en ce que le moyen de commande 6 comporte, encore, de part et d'autre d'au moins un écrou 42, au moins un moyen (60 ; 60') pour exercer une précontrainte sur un tel écrou 42.

En fait un tel moyen de précontrainte (60 ; 60') est positionné de manière axiale, plus particulièrement conformément à l'axe des corps tubulaire externe 2 et interne 3, ceci par rapport à l'arbre d'entraînement 41.

Selon un mode de réalisation préféré de l'invention illustré sur les figures en annexe, un tel moyen (60 ; 60') pour exercer une précontrainte est interposé entre une butée latérale (430 ; 430') et un écrou 42 de l'actionneur 1. C'est, plus particulièrement, sur une telle butée latérale (430 ; 430') et sur un tel écrou 42 qu'un tel moyen de précontrainte (60 ; 60') prend appui, ceci pour exercer une telle précontrainte sur un tel écrou 42.

En fait, un mode préféré de réalisation consiste en ce qu'un moyen 60 pour exercer une précontrainte est constitué par un élément élastique écrasé à une côte correspondant à la contrainte seuil Fs.

Un tel élément élastique peut être constitué par un ressort (plus particulièrement un ressort hélicoïdal), voire (et de préférence) par une rondelle de type Belleville.

Ainsi, lorsque la contrainte exercée sur l'actionneur 1 est inférieure à la contrainte seuil Fs, l'arbre 41 et l'écrou 42 adoptent une position inactive d'appui (figures 2 et 4).

Cependant, lorsque la contrainte exercée sur l'actionneur 1 dépasse la contrainte seuil Fs, l'arbre 41 va se décaler légèrement par rapport à l'écrou 42 en appui sur les billes 44 jusqu'à ce que le surplus de contrainte (par rapport à la contrainte seuil Fs) comprime le moyen de précontrainte 60 de la valeur du jeu 53 entre le moyen d'appui 5 et la piste de roulement 20.

Le moyen d'appui 5 prend, alors, appui sur la piste de roulement 20 qui reçoit l'effort (figure 3). Cette prise d'appui s'opère selon au moins une ligne de contact qui représente une surface de contact considérablement plus grande que celle des points de contact des billes 44 avec la piste de roulement 20.

De plus, ces billes 44 ne subissent qu'un effort limité par la contrainte seuil Fs à laquelle s'ajoute le delta d'effort nécessaire pour assurer le déplacement de l'arbre 41 en vue de la prise d'appui du moyen d'appui 5 sur la piste de roulement 20. La pression de Hertz résultant des points de contact entre les billes 44 et la piste de roulement 20 est, alors, limitée, surtout en comparaison avec la pression exercée par le moyen d'appui 5 sur cette piste de roulement 20.

La majeure partie de la contrainte subie par l'actionneur 1 est, alors, exercée au moins sur la ligne de contact entre le moyen d'appui 5 et la piste de roulement 20 ce qui permet une meilleure répartition de cette contrainte sur l'actionneur 1 (par rapport à une même contrainte exercée uniquement au travers de points de contact comme c'est le cas pour les actionneurs de l'état de la technique) et, par conséquent, de limiter (voire d'éviter) les dégradations susceptibles d'être occasionnées à cet actionneur 1 par une telle contrainte.

Une caractéristique additionnelle consiste en ce que l'actionneur 1 conforme à l'invention comporte un moyen 7 pour régler la précontrainte exercée par un moyen (60 ; 60') de précontrainte sur au moins un écrou 42. Un tel moyen de réglage 7 comporte un écrou de serrage 70, associé à l'arbre d'entraînement 41 (notamment monté axialement sur celui-ci 41), définissant un épaulement constituant une butée latérale 430 susmentionnée, et prenant appui contre un tel moyen 60 de précontrainte.

Une autre caractéristique de l'invention consiste en ce que le ou les écrous 42, que comporte le moyen d'entraînement 4, présente des caractéristiques qui ont été décrites plus en détail dans le document EP-1.523.630.

En fait, un tel écrou 42 comporte au moins deux cames (422, 422') adoptant une forme générale cylindrique et s'étendent, chacune, selon un axe qui correspond, de préférence, à l'axe des corps tubulaires (2 ; 3).

Tel que visible sur les figures en annexe, ces cames (422, 422') sont alignées axialement selon un tel axe et sont positionnées en face l'une 422 de l'autre 422'.

Ces cames (422 ; 422') présentant, chacune, au moins un chanfrein, de forme adaptée, réalisé en sorte de définir un chemin de roulement hélicoïdal 420 autour de l'écrou 42 constitué par ces cames (420 ; 420').

Celles-ci (422 ; 422') présentent, également, chacune, un usinage réalisé en sorte de définir une zone de re-circulation 421 des billes 44.

Un mode particulier de réalisation consiste en ce que l'écrou 42 d'un actionneur 1 comporte, en fait, deux cames (422 ; 422') qui présentent une structure symétrique, voire (et de préférence) identique.

Une autre caractéristique additionnelle de l'invention consiste en ce que l'actionneur 1 (plus particulièrement son moyen de montage 43) comporte une pluralité de butées d'arrêt (431 ; 431') associées, chacune, à une came (422 ; 422') de l'écrou 42. C'est, plus particulièrement, contre une telle butée d'arrêt (431 ; 431') qu'une telle came (422 ; 422') est maintenue en appui par un moyen (60 ; 60') pour exercer une précontrainte.

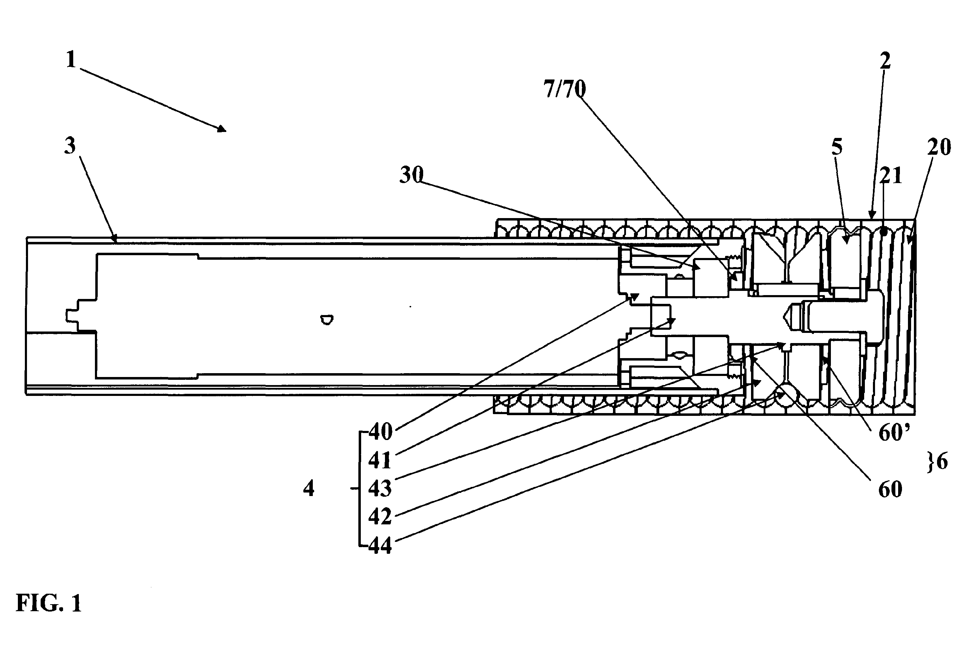

Ainsi, figures 1 à 3, il a été représenté un premier mode de réalisation de l'invention (constituant, plus particulièrement, une solution symétrique) dans lequel une telle butée d'arrêt (431 ; 431') est constituée par épaulement défini au niveau du corps de l'arbre 41 et contre lequel est maintenue en appui une came (422 ; 422').

En fait, un tel maintien est assuré pour une contrainte axiale, exercée sur le moyen de précontrainte (60 ; 60') associé à cette came (422 ; 422'), inférieure ou égale à la contrainte seuil Fs. En particulier et comme visible figues 1 et 2, un tel maintien est assuré en l'absence de contrainte exercée sur un tel moyen de précontrainte (60 ; 60').

Tel que visible sur les figures 1 à 3 en annexe, les butées d'arrêt (431 ; 431') associées aux cames (422 ; 422') d'un même écrou 42 sont interposées entre deux cames (422 ; 422') de cet écrou 42, voire sont constituées par un unique élément (plus particulièrement constitué par une nervure radiale) au niveau duquel sont définis deux épaulements constituant de telles butées d'arrêt (431 ; 431').

Il a été représenté figure 4 un deuxième mode de réalisation (constituant, plus particulièrement une solution différentielle) dans lequel une butée d'arrêt (431 ; 431') associée à une came (422 ; 422') d'un écrou 42 est, en fait, constituée par une autre came (422' ; 422) que comporte cet écrou 42 et contre laquelle (422' ; 422) cette came (422 ; 422') est maintenue en appui.

Là encore, un tel maintien est assuré pour une contrainte axiale, exercée sur le moyen de précontrainte (60 ; 60') associé à cette came (422 ; 422'), inférieure ou égale à la contrainte seuil Fs. En particulier et comme visible figue 4, un tel maintien est assuré en l'absence de contrainte exercée sur un tel moyen de précontrainte (60 ; 60').

En fait, chaque came (422 ; 422') d'un même écrou 42 peut prendre appui sur l'autre came (422' ; 422) de cet écrou 42, ceci de manière directe ou de manière indirecte.

A ce propos et tel que visible sur la figure 4, l'actionneur 1 conforme à l'invention peut comporter, interposé entre deux cames (422 ; 422') d'un même écrou 42, un élément intermédiaire 8 sur lequel prennent appui chacune de ces deux cames (422 ; 422'), notamment sous l'impulsion du moyen (60 ; 60') pour exercer une précontrainte sur cet écrou 42, ceci pour une prise d'appui indirecte d'une telle came (422 ; 422') sur l'autre (422' ; 422).

Une caractéristique additionnelle de l'invention consiste en ce que l'actionneur 1 comporte, encore, un moyen 8 pour le réglage d'une précontrainte exercée par ces cames (422 ; 422') sur les billes 44.

En fait, un tel moyen 8 de réglage est, plus particulièrement, conçu pour exercer une précontrainte de base sur ces billes 42 par l'intermédiaire de ces cames (422 ; 422').

Un mode de réalisation préféré consiste en ce que ce moyen 8 de réglage est interposé entre deux cames (422 ; 422') d'un même écrou et est, plus particulièrement, constitué par l'élément intermédiaire 8 susmentionné.

Selon un mode de réalisation préféré, ce moyen de réglage 8 peut être constitué par une rondelle engagée sur l'arbre d'entraînement 41.

De manière particulière, ce moyen de réglage 8 peut, avantageusement, être conçu pour toujours exercer la même précontrainte sur les billes 42, ceci même en cas d'usure. A cet effet, ce moyen de réglage 8 peut être de type élastique et être, alors, constitué par une rondelle élastique.

Finalement, dans le cadre de ce deuxième mode de réalisation (solution différentielle) et comme visible figure 4, l'arbre d'entraînement 41 recevant les cames (422 ; 422') d'au moins un écrou 42 est, de préférence, de type étagé.

Un arbre d'entraînement 41 de ce type autorise, alors avantageusement, un montage (ainsi qu'un démontage) facilité des différents éléments constituant le moyen d'entraînement 4, le moyen d'appui 5 et le moyen de commande 6, ceci sur le corps tubulaire interne 3.

## Revendications

1. Actionneur linéaire (1) comportant :
- un corps tubulaire externe (2) s'étendant selon un axe et présentant, intérieurement, au moins une piste de roulement hélicoïdale (20) ;
- un corps tubulaire interne (3), mobile en translation à l'intérieur du corps tubulaire externe (2), coaxial à celui-ci (2), et recevant intérieurement un moteur (40) d'entraînement en rotation d'un arbre (41) coaxial aux corps tubulaires (2 ; 3);
- monté sur cet arbre (41), au moins un écrou (42), mobile en rotation et en translation à l'intérieur du corps tubulaire externe (2), et présentant, d'une part, au moins un chemin de roulement hélicoïdal (420) s'étendant autour de cet écrou (42) et pourvu de deux extrémités et, d'autre part, une zone de re-circulation (421) raccordant les deux extrémités d'un tel chemin de roulement (420) ;
- des billes (44) disposées entre un chemin de roulement (420) d'au moins un écrou (42) et une piste de roulement (20) du corps tubulaire externe (2) ainsi que dans la zone de re-circulation (421) d'un tel écrou (42), **caractérisé par le fait que** l'actionneur (1) comporte :
- au moins un moyen d'appui (5), d'une part, constitué par un patin (50) de forme générale cylindrique rendu solidaire fixement de l'arbre (41) et présentant au moins un filet hélicoïdal (51) s'étendant autour de ce patin (50) et, d'autre part, conçu pour prendre appui sur une piste de roulement (20) du corps tubulaire externe (2) selon au moins une ligne de contact ;
- au moins un moyen (6) de commande de ce moyen d'appui (5), ce moyen de commande (6) comportant, d'une part, un moyen (43) pour le montage, fixe en rotation et mobile en translation, du ou des écrous (42) sur l'arbre (41) et, d'autre part, axialement et de part et d'autre d'un tel écrou (42), au moins un moyen (60 ; 60') pour exercer une précontrainte sur un tel écrou (42), ce moyen de commande (6) étant conçu, d'une part, pour maintenir un tel moyen d'appui (5) dans une position inactive d'appui dans laquelle il subsiste un jeu (53) entre ce moyen d'appui (5) et la piste de roulement (20) et, d'autre part, pour faire adopter à un tel moyen d'appui (5) une position active d'appui sur la piste de roulement (20), ceci sous l'effet d'une contrainte axiale (F), supérieure à une contrainte seuil (Fs), exercée sur l'actionneur (1).

2. Actionneur linéaire (1) selon la revendication 1, **caractérisé par le fait que** le filet hélicoïdal (51) présente un pas sensiblement égal à celui de la piste de roulement hélicoïdale (20) du corps tubulaire externe (2).

3. Actionneur linéaire (1) selon l'une quelconque des revendications précédentes, **caractérisé par le fait que** le filet hélicoïdal (51) présente un profil adoptant grossièrement une forme générale en demi-cercle (52) dont le rayon est sensiblement égal à celui des billes (44).

4. Actionneur linéaire (1) selon l'une quelconque des revendications précédentes, **caractérisé par le fait que** le filet hélicoïdal (51) présente un profil adoptant la forme de deux arcs de cercles (52) dont les centres sont décalés et dont les rayons correspondent, sensiblement, à celui des billes (44).

5. Actionneur linéaire selon la revendication 4, **caractérisé par le fait que** le décalage entre les centres des cercles des deux arcs de cercles (52) correspond sensiblement à un jeu latéral (53) entre le filet (51) du patin (50) et la piste de roulement (20) du corps tubulaire externe (2).

6. Actionneur linéaire (1) selon l'une quelconque des revendications précédentes, **caractérisé par le fait que** le sommet (54) du filet (51) présente au moins une portion tronquée de manière à éviter le contact de ce sommet (54) avec la piste de roulement (20) du corps tubulaire externe (2).

7. Actionneur linéaire (1) selon l'une quelconque des revendications précédentes, **caractérisé par le fait que** le moyen (43) de montage d'un écrou (42) comporte des butées latérales (430 ; 430') entre lesquelles un tel écrou (42) est monté en translation et qu'un moyen (60 ; 60') pour exercer une précontrainte est interposé entre une telle butée latérale (430 ; 430') et l'écrou (42).

8. Actionneur linéaire (1) selon l'une quelconque des revendications précédentes, **caractérisé par le fait que** le moyen (60 ; 60') pour exercer une précontrainte est constitué par un élément élastique écrasé à une côte correspondant à la contrainte seuil (Fs).

9. Actionneur linéaire (1) selon l'une quelconque des revendications précédentes, **caractérisé par le fait que** le ou les écrous (42) comportent au moins deux cames (422 ; 422'), de forme générale cylindrique, alignées axialement, et présentant chacune au moins un chanfrein réalisé en sorte de définir un chemin de roulement hélicoïdal (420) autour de cet écrou (42) et un usinage réalisé en sorte de définir une zone de re-circulation (421) des billes (44).

10. Actionneur linéaire (1) selon la revendication 9, **caractérisé par le fait que** l'actionneur (1) comporte une pluralité de butées d'arrêt (431 ; 431') associées, chacune, à une came (422 ; 422') de l'écrou (42) et que chaque came (422 ; 42') est maintenue en appui contre une telle butée d'arrêt (431 ; 431') par un moyen (60 ; 60') pour exercer une précontrainte.

11. Actionneur linéaire (1) selon la revendication 10, **caractérisé par le fait que** la butée d'arrêt (431 ; 431') est constituée par épaulement défini au niveau du corps de l'arbre (41) et contre lequel est maintenue en appui une came (422 ; 422'), ceci pour une contrainte axiale, exercée sur le moyen (60 ; 60') de précontrainte associé à cette came (422 ; 422'), inférieure ou égale à la contrainte seuil (Fs).

12. Actionneur linéaire (1) selon la revendication 10, **caractérisé par le fait que** la butée d'arrêt (431 ; 431') associée à une came (422 ; 422') d'un écrou (42) est constituée par une autre came (422' ; 422) que comporte cet écrou (42) et contre laquelle (422' ; 422) cette came (422 ; 422') est maintenue en appui, ceci pour une contrainte axiale, exercée sur le moyen (60 ; 60') de précontrainte associé à cette came (422 ; 422'), inférieure ou égale à la contrainte seuil (Fs).

13. Actionneur linéaire (1) selon la revendication 12, **caractérisé par le fait que** l'actionneur (1) comporte, interposé entre deux cames (422 ; 422') d'un même écrou (42), un moyen (8) pour le réglage d'une précontrainte exercée par ces cames (422 ; 422') sur les billes (44).

14. Actionneur linéaire (1) selon l'une quelconque des revendication 12 ou 13, **caractérisé par le fait que** l'arbre (41) recevant les cames (422 ; 422') d'au moins un écrou (42) est de type étagé.

## Claims

1. Linear actuator (1), including :
- an outer tubular body (2) extending according to an axis and having, internally, at least one helical rolling track (20) ;
- an inner tubular body (3), movable in translation inside the outer tubular body (2), coaxial to the latter (2), and receiving internally a motor (40) for driving in rotation a shaft (41) coaxial to the tubular bodies (2 ; 3);
- mounted on this shaft (41), at least one nut (42), movable in rotation and translation inside the outer tubular body (2), and having, on the one hand, at least one helical raceway (420) extending about this nut (42) and provided with two ends, and on the other hand, a re-circulation area (421) connecting the two ends of such a raceway (420) ;
- balls (44) arranged between a raceway (420) of at least one nut (42) and a rolling track (20) of the outer tubular body (2) as well as in the re-circulation area (421) of such a nut (42), wherein the actuator (1) includes :
- at least one resting means (5), on the one hand, formed of a shoe (50) having a generally cylindrical shape and made firmly integral with the shaft (41) and having at least one helical thread (51) extending about this shoe (50), and on the other hand, designed so as to rest on a rolling track (20) of the outer tubular body (2) according to at least one contact line ;
- at least one means (6) for controlling this resting means (5), this control means (6) including, on the one hand, a means (43) for mounting, fixed in rotation and movable in translation, the nut or nuts (42) onto the shaft (41), and on the other hand, axially and on both sides of such a nut (42), at least one means (60 ; 60') for exerting a pre-stress on such a nut (42), this control means (6) being designed, on the one hand, so as to maintain such a resting means (5) in an inactive resting position in which there remains a backlash (53) between this resting means (5) and the rolling track (20), and on the other hand, so as to cause such a resting means (5) to adopt an active resting position on the rolling track (20), this under the action of an axial stress (F) higher than a threshold stress (Fs) exerted on the actuator (1).

2. Linear actuator (1) according to claim 1, wherein the helical thread (51) has a pitch substantially equal to that of the helical rolling track (20) of the outer tubular body (2).

3. Linear actuator (1) according to any one of the preceding claims, wherein the helical thread (51) has a profile adopting approximately a generally semicircular shape (52) the radius of which is substantially equal to that of the balls (44).

4. Linear actuator (1) according to any one of the preceding claims, wherein the helical thread (51) has a profile adopting shape of two arcs of a circle (52) the centers of which are offset and the radii of which correspond substantially to that of the balls (44).

5. Linear actuator (1) according to claim 4, wherein the offset between the centers of the circles of the two arcs of a circle (52) correspond substantially to a side backlash (53) between the thread (51) of the shoe (50) and the rolling track (20) of the outer tubular body (2).

6. Linear actuator (1) according to any one of the preceding claims, wherein the top (54) of the thread (51) has at least one truncated portion, so as to avoid the contact of this top (54) with the rolling track (20) of the outer tubular body (2).

7. Linear actuator (1) according to any one of the preceding claims, wherein the means (43) for mounting a nut (42) includes side stops (430 ; 430') between which such a nut (42) is mounted in translation and a means (60 ; 60') for exerting a pre-stress is interposed between such a side stop (430 ; 430') and the nut (42).

8. Linear actuator (1) according to any one of the preceding claims, wherein the means (60 ; 60') for exerting a pre-stress is formed by an elastic element collapsed to a measure corresponding to the threshold stress (Fs).

9. Linear actuator (1) according to any one of the preceding claims, wherein the nut or nuts (42) include at least two cams (422 ; 422') having a cylindrical general shape, aligned axially and each having at least one beveled face made so as to define a helical raceway (420) about this nut (42) and a machining made so as to define a re-circulation area (421) for the balls (44).

10. Linear actuator (1) according to claim 9, wherein the actuator (1) includes a plurality of stops (431 ; 431') each associated with a cam (422 ; 422') of the nut (42) and each cam (422 ; 42') is maintained applied against such a stop (431 ; 431') by a means (60 ; 60') for exerting a pre-stress.

11. Linear actuator (1) according to claim 10, wherein the stop (431 ; 431') is formed by a shoulder defined at the level of the body of the shaft (41) and against which a cam (422 ; 422') is maintained applied, this for an axial stress exerted onto the pre-stressing means (60 ; 60') associated with this cam (422 ; 422'), lower or equal to the threshold stress (Fs).

12. Linear actuator (1) according to claim 10, wherein the stop (431 ; 431') associated with a cam (422 ; 422') of a nut (42) is formed by another cam (422' ; 422) this nut (42) includes and against which (422' ; 422) this cam (422 ; 422') is maintained applied, this for an axial stress exerted on the pre-stressing means (60 ; 60') associated with this cam (422 ; 422'), lower or equal to the threshold stress (Fs).

13. Linear actuator (1) according to claim 12, wherein the actuator (1) includes, interposed between two cams (422 ; 422') of one and the same nut (42), a means (8) for adjusting a pre-stress exerted by these cams (422 ; 422') on the balls (44).

14. Linear actuator (1) according to any one of claims 12 or 13, wherein the shaft (41) receiving the cams (422 ; 422') of at least one nut (42) is of the stepped type.

## Patentansprüche

1. Linearbetätigungsglied (1), umfassend:
- einen röhrenförmigen Außenkörper (2), der sich nach einer Achse erstreckt und innerlich zumindest einen spiralförmigen Kugellaufring (20) aufweist;
- einen röhrenförmigen Innenkörper (3), der beweglich in Translation im Innern des röhrenförmigen Außenkörpers (2), koaxial zu diesem letzteren (2) ist, und innerlich einen Motor (40) zum Antrieb in Drehung einer Welle (41) koaxial zu den röhrenförmigen Körpern (2; 3? aufnimmt;
- zumindest eine Schraubenmutter (42), die auf dieser Welle (41) gelagert ist und in Drehung und in Translation im Innern des röhrenförmigen Außenkörpers (2) beweglich ist, und, einerseits, zumindest eine spiralförmige Laufbahn (420), die sich um diese Schraubenmutter (42) herum erstreckt und mit zwei Enden ausgestattet ist, und andererseits, einen Umlaufbereich (421), der die beiden Enden einer solchen Laufbahn (420) verbindet, aufweist;
- Kugeln (44), die zwischen einer Laufbahn (420) von zumindest einer Schraubenmutter (42) und einem Kugellaufring (20) des röhrenförmigen Außenkörpers (2) sowie in dem Umlaufbereich (421) einer solchen Schraubenmutter (42) angeordnet sind, **dadurch gekennzeichnet, dass** das Linearbetätigungsglied (1) Folgendes umfasst:
- zumindest ein Haltemittel (5), das, einerseits, durch einen Träger (50) mit einer im allgemeinen zylindrischen Form gebildet ist, der drehfest mit der Welle (41) fest verbunden ist und zumindest ein wendelförmiges Gewinde (51) aufweist, das sich um diesen Träger (50) herum erstreckt, und der, andererseits, vorgesehen ist, um sich am Kugellaufring (20) des röhrenförmigen Außenkörpers (2) nach zumindest einer Kontaktlinie abzustützen;
- zumindest ein Mittel (6) zum Steuern dieses Haltemittels (5), wobei dieses Steuermittel (6), einerseits, ein Mittel (43) für die Montage fest in Drehung und beweglich in Translation der Schraubenmutter oder -muttern (42) an der Welle (41), und, andererseits, axial und beiderseits von einer solchen Schraubenmutter (42) zumindest ein Mittel (60; 60'), um auf eine solche Schraubenmutter (42) eine Vorbeanspruchung auszuüben, umfasst, wobei dieses Steuermittel (6) vorgesehen sei, um, einerseits, ein solches Haltemittel (5) in einer inaktiven Trageposition zu halten, in welcher ein Spiel (53) zwischen diesem Haltemittel (5) und dem Kugellaufring (20) fortbestehen bleibt, und andererseits, um es einem solchen Haltemittel (5) zu ermöglichen, eine aktive Trageposition hinsichtlich des Kugellaufrings (20) anzunehmen, und zwar unter der Wirkung einer axialen Beanspruchung (F), die größer ist als eine Beanspruchungsschwelle (FS), die auf das Linearbetätigungsglied (1) ausgeübt ist.

2. Linearbetätigungsglied (1) nach Anspruch 1, **dadurch gekennzeichnet, dass** das wendelförmige Gewinde (51) einen Schritt aufweist, der im Wesentlichen jenem des spiralförmigen Kugellaufrings (20) des röhrenförmigen Außenkörpers (2) entspricht.

3. Linearbetätigungsglied (1) nach irgendeinem der vorgehenden Ansprüche, **dadurch gekennzeichnet, dass** das wendelförmige Gewinde (51) ein Profil aufweist, das ungefähr eine im allgemeinen halbrunde Form (52) annimmt, deren Halbmesser im Wesentlichen jenem der Kugeln (44) entspricht.

4. Linearbetätigungsglied (1) nach irgendeinem der vorgehenden Ansprüche, **dadurch gekennzeichnet, dass** das wendelförmige Gewinde (51) ein Profil aufweist, das die Form von zwei Kreisbögen (52) annimmt, deren Mittelpunkte versetzt sind und deren Halbmesser im Wesentlichen jenem der Kugeln (44) entsprechen.

5. Linearbetätigungsglied nach Anspruch 4, **dadurch gekennzeichnet, dass** die Versetzung zwischen den Mittelpunkten der Kreise der beiden Kreisbögen (52) im Wesentlichen einem Seitenspiel (53) zwischen dem Gewinde (51) des Trägers (50) und dem Kugellaufring (20) des röhrenförmigen Außenkörpers (2) entspricht.

6. Linearbetätigungsglied (1) nach irgendeinem der vorgehenden Ansprüche, **dadurch gekennzeichnet, dass** die Spitze (54) des Gewindes (51) zumindest einen kegelstumpfförmigen Teilbereich aufweist, derart, um den Kontakt dieser Gewindespitze (54) mit dem Kugellaufring (20) des röhrenförmigen Außenkörpers (2) zu vermeiden.

7. Linearbetätigungsglied (1) nach irgendeinem der vorgehenden Ansprüche, **dadurch gekennzeichnet, dass** das Mittel (43) zur Montage einer Schraubenmutter (42) seitliche Anschläge (430; 430') umfasst, zwischen welchen eine solche Schraubenmutter (42) verschieblich gelagert ist, und dass ein Mittel (60; 60'), um eine Vorbeanspruchung auszuüben, zwischen einem solchen seitlichen Anschlag (430; 430') und der Schraubenmutter (42) eingefügt ist.

8. Linearbetätigungsglied (1) nach irgendeinem der vorgehenden Ansprüche, **dadurch gekennzeichnet, dass** das Mittel (60; 60'), um eine Vorbeanspruchung auszuüben, durch ein elastisches Teil gebildet ist, das an einer Seitenfläche festgedrückt ist, die der Beanspruchungsschwelle (FS) entspricht.

9. Linearbetätigungsglied (1) nach irgendeinem der vorgehenden Ansprüche, **dadurch gekennzeichnet, dass** die Schraubenmutter oder -muttern (42) zumindest zwei Nocken (422; 422') mit einer im allgemeinen zylindrischen Form umfassen, die axial ausgerichtet sind und jeweils zumindest eine Abschrägung aufweisen, die derart gefertigt ist, um eine spiralförmige Laufbahn (420) um diese Schraubenmutter (42) herum zu bilden, und eine Bearbeitung umfassen, die derart ausgeführt ist, um einen Umlaufbereich (421) der Kugeln (44) zu bilden.

10. Linearbetätigungsglied (1) nach Anspruch 9, **dadurch gekennzeichnet, dass** das Linearbetätigungsglied (1) eine Mehrheit von Anschlägen (431; 431') umfasst, die jeweils einem Nocken (422; 422') der Schraubenmutter (42) zugeordnet sind, und dass jeder Nocken (422; 42') gegen einen solchen Sperranschlag (431; 431') durch ein Mittel (60; 60'), um eine Vorbeanspruchung auszuüben, abgestützt bleibt.

11. Linearbetätigungsglied (1) nach Anspruch 10, **dadurch gekennzeichnet, dass** der Sperranschlag (431; 431') durch einen Ansatz gebildet ist, der im Bereich des Körpers der Welle (41) gebildet ist und gegen welchen ein Nocken (422; 422') gestützt gehalten bleibt, und zwar für eine axiale Beanspruchung, die auf das Vorbeanspruchungsmittel (60; 60'), welches diesem Nocken (422; 422') zugeordnet ist, ausgeübt ist, die kleiner als oder gleich groß ist wie die Beanspruchungsschwelle (FS).

12. Linearbetätigungsglied (1) nach Anspruch 10, **dadurch gekennzeichnet, dass** der Sperranschlag (431; 431'), der einem Nocken (422; 422') von einer Schraubenmutter (42) zugeordnet ist, durch einen anderen Nocken (422'; 422) gebildet ist, den diese Schraubenmutter (42) umfasst, und gegen welchen (422'; 422) dieser Nocken (422; 422') gestützt gehalten wird, und zwar für eine axiale Beanspruchung, die auf das Vorbeanspruchungsmittel (60; 60'), welches diesem Nocken (422; 422') zugeordnet ist, ausgeübt ist, die kleiner als oder gleich groß ist wie die Beanspruchungsschwelle (FS).

13. Linearbetätigungsglied (1) nach Anspruch 12, **dadurch gekennzeichnet, dass** das Linearbetätigungsglied (1) ein zwischen den beiden Nocken (422; 422') von einer und desselben Schraubenmutter (42) eingefügtes Mittel (8) für die Einstellung einer Vorbeanspruchung umfasst, die durch diese Nocken (422; 422') auf die Kugeln (44) ausgeübt ist.

14. Linearbetätigungsglied (1) nach irgendeinem der Ansprüche 12 oder 13, **dadurch gekennzeichnet, dass** die Welle (41), die die Nocken (422; 422') von zumindest einer Schraubenmutter (42) aufnimmt, der Art Stufenwelle ist.
